Europäisches Patentamt

European Patent Office

Office européen des brevets

(11) Publication number: **0 218 409**
**A2**

## (12) EUROPEAN PATENT APPLICATION

(21) Application number: **86307293.0**

(22) Date of filing: **23.09.86**

(51) Int. Cl.⁴: **F 28 F 27/00**

(30) Priority: **27.09.85 GB 8523928**

(43) Date of publication of application:
**15.04.87 Bulletin 87/16**

(84) Designated Contracting States:
**BE CH DE FR GB LI NL**

(71) Applicant: **J. Moutrie**
**7 Thorold Road Barrowby**
**Grantham, Lincs. NG32 1TD (GB)**

(72) Inventor: **J. Moutrie**
**7 Thorold Road Barrowby**
**Grantham, Lincs. NG32 1TD (GB)**

(74) Representative: **Wilson, Joseph Martin et al**
**WITHERS & ROGERS 4 Dyer's Buildings Holborn**
**London EC1N 2JT (GB)**

(54) Improvements in and relating to a non-return valve assembly.

(57) A non-return valve assembly for application to a heating radiator comprising an adaptor including external connection means for connection to a radiator and having means shaped to receive a non-return valve and a non-return valve shaped to fit the adaptor.

Fig.1.

**Description**

Improvements in and relating to a non-return valve assembly

This invention is concerned with the provision of a non-return valve assembly specially adapted for use when it is desired to disconnect a radiator from a central heating system. The invention also provides an improved method of disconnecting a radiator from a central heating system.

A conventional central heating system uses a number of radiators interconnected by pipes through which water, heated by a suitable water heater, is circulated. Each radiator usually has a shut off valve at each end and a bleed valve at the top. Sometimes it is necessary to remove a radiator from the system, e.g. for maintenance purposes or to enable decoration to be carried out on a wall behind the radiator. At present there are really only two ways by means of which a radiator can be removed and neither way is very satisfactory. The first way is to drain the entire heating system, which takes a very considerable time even in a domestic system, and in a factory can take as much as a day. The second way is to valve off the radiator which it is desired to remove by closing the shut off valve at each end of the radiator and then to disconnect the unions between the valves and the radiator so that the radiator can then be removed without draining down the whole system. However the radiator is still full of dirty water and it is difficult to avoid getting water all over the floor.

According to one aspect of the invention I arrange to empty a radiator of water before removing the radiator from the system and without draining down the whole system. In order to achieve this result I isolate the radiator and replace the bleedscrew with a specially adapted non-return valve assembly. Alternatively the specially adapted assembly may replace the entire bleed valve (since the invention can also be used as a conventional bleed valve) or may be fitted in a separate opening in the radiator. I can then open one of the shut off valves, and by means of gas pressure applied through the non-return valve assembly I force the water out of the radiator and back into the expansion tank of the system. Naturally air under pressure is the preferred gas to use. In more detail the sequence of operations is as follows:

1. Assuming the new non-return assembly is not already fitted, first close both shut off valves at the bottom of the radiator and then remove the bleed screw and replace with my new non-return valve assembly.

2. Open one shut off valve and introduce gas (air) under pressure into the radiator through the bleed opening. now fitted with the valve assembly.

3. Close the shut off valve again relieve the excess air pressure in the radiator through the non-return valve assembly and remove the now empty radiator.

In order that the invention may be more clearly understood reference is now directed to the accompanying drawings. given by way of example. in which:

Figures 1 to 4 are relatively simple diagrammatic views intended to illustrate the underlying idea of the invention and Figures 5 and 6 are views in more detail of production items.

Figure 1 shows an exploded diagrammatic view of a non-return radiator valve assembly adapted to fit an existing bleed screw.

Figure 2 shows an exploded diagrammatic view of a similar non-return radiator valve assembly but using a different type of non-return valve.

Figure 3 shows a ball type radiator valve.

Figure 4 shows an exploded diagrammatic view of a non-return valve assembly adapted to fit a special opening provided in a radiator to replace the entire bleed screw.

Figure 5 is a view similar to Figure 1 showing the detail of the adaptor body, and

Figure 6 is a view of an adaptor to enable the valve to be used with existing popular radiators.

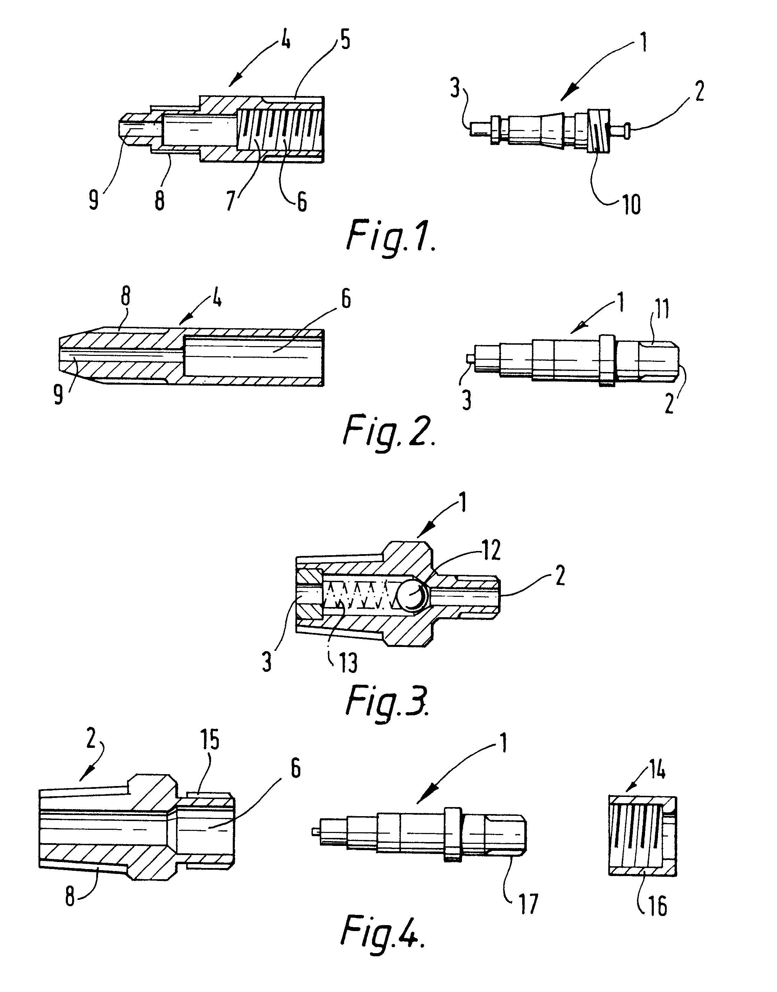

Referring first to figure 1 a conventional tyre valve is shown at 1. As is well known such a valve is constructed to allow gas under pressure to pass through the valve from the inlet end 2 to the outlet end 3 by displacement of a resilient sleeve or the like but will not permit the gas to flow back from the outlet end 3 to the inlet end 2. An adaptor 4 is provided to enable the valve 1 to be fitted to a radiator bleed valve socket. The adaptor 4 has an external screw thread 5 for attachment of a pump, an axially extending pocket 6 with an internal screw thread 7, an external screw thread 8 to fit a radiator bleed screw socket and an orifice or nozzle 9.

The pocket 6 is connected to an axial passage extending through the adaptor 4 to the nozzle 9. In operation the bleed screw is removed from a radiator, the adaptor 4 is screwed into the bleed screw socket or opening using the screw threads 8 and the non-return valve 1 is connected to the adaptor 4 using external threads 10 on the valve which connect with the internal threads 7 on the adaptor. A pump is then connected to thread 5 and by means of gas pressure supplied by the pump the water is pushed out of the radiator. Normally, the valve will be permanently fitted to the adaptor, and any other suitable source of pressure gas may be used instead of the pump e.g. a gas cylinder.

In Figure 2 a construction of non-return valve and adaptor similar to that shown in figure 1 is illustrated and the same references as in Figure 1 are used for the same parts. In figure 2 the screw threads 7 and 10 are omitted. the valve 1 is a frictional or crimped fit within the pocket 6 and the valve 1 has a screw thread 11 to which a source of gas under pressure e.g. a pump can be connected.

It will be understood that any suitable construction of non-return valve can be used and the invention is certainly not limited to the use of a tyre valve.

Figure 3 shows oneexample of another form of non-return valve. In figure 3 the valve 1 has a central passage extending axially thereof with a ball 12 held on its seating by a spring 13 so that gas under pressure can flow from inlet 2 to outlet 3 but not in the opposite direction.

Instead of screwing the new non-return valve into the bleed screw position, the non-return may replace the entire bleed valve or the radiator may be provided with a special opening to receive an assembly as shown in Figure 4 which may remain permanently in position or which may be used to replace a closure cap for the opening when it is desired to remove the radiator from the system. It will be noted that the assembly of figure 4 includes a non-return valve 1, an adaptor 2 and a cover cap 14. As illustrated in Figure 4 the adaptor 2 has an external screw-thread 15 for engagement by an internal screw thread 16 on the cap 14. The valve 1 has an external screw thread 17 for engagement by a pump of other source of gas under pressure.

I have therefore provided a non-return valve assembly adapted for application to a radiator in the manner described above to permit water to be removed from a radiator when it is required to remove the radiator from the system in accordance with this aspect of the invention I may provide a non-return valve assembly comprising an adaptor for connection to an opening in the radiator and a non-return valve for connection to the adaptor. Naturally if desired the non-return valve assembly including the adaptor and the valve may be provided as a substantially integral assembly or the parts may be separate or separable as illustrated.

It will be understood from the above that the underlying idea of the invention is to replace the water in a radiator by gas under pressure when it is desired to disconnect the radiator from the system, the removal of the radiator being carried out in accordance with the method described above using the non-return valve assembly to facilite the disconnection without spilling water.

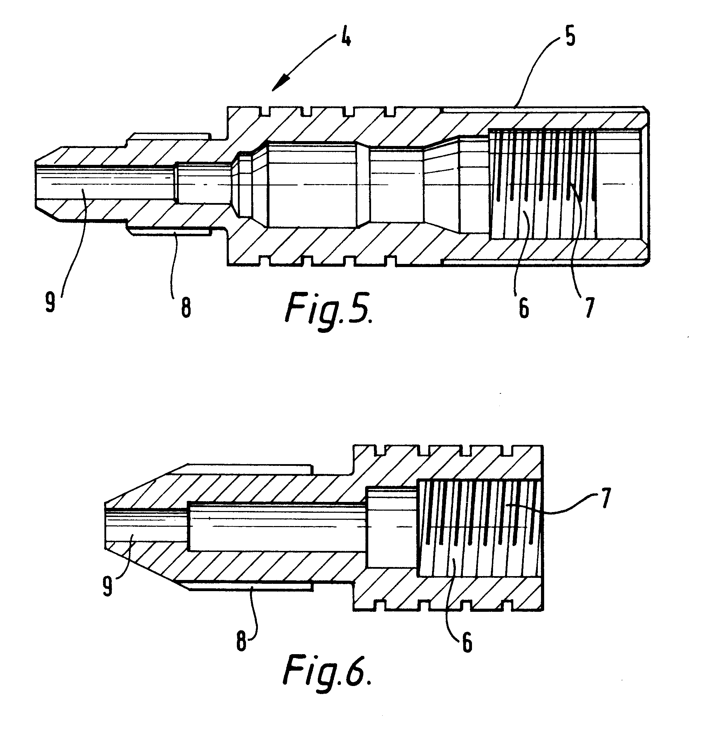

Referring now to Figures 5 and 6, it will be noted that the same references have been used as in Figure 1, the main difference from Figure 1 being that Figure 5 gives full details of a preferred form inner profile or internal shaping of the adaptor body and Figure 6 gives full details of a preferred form of adaptor to fit existing popular radiators.

It will be noted from Figures 5 and 6 that the adaptor 4 has a somewhat complex internal profile. The reason for this is that in the detailed production design three problems has to be borne in mind. Firstly it was clearly desirable that the assembly should be adapted to fit as many of the existing types of radiators as possible. Secondly it was desirable that the assembly should be as short as possible in order, for example, to fit some radiators in which the bleed screw is located at the back of the radiator so the assembly usually has to fit between the radiator and a wall and thirdly it was desirable to keep the differential pressure across the valve to a minimum in order to make it as easy as possible to displace the water back to the header tank. The complex internal profile of the production form of the adaptor 4 provides an air space around the valve 1 whilst keeping the valve as short as possible and at the same time maintaining sufficient thickness of material bearing in mind the outer profile which is largely determined by the need to fit various types of radiator. The outer castellations shown in Figure 5 are provided to emphasise the appearance of the assembly. A reasonably smooth exterior is needed to prevent overtightening of the valve and the grooves forming the castellations achieve these objects.

## Claims

1. A non-return valve assembly for application to a heating radiator comprising an adaptor including external connection means for connection to a radiator and having means shaped to receive a non-return valve and a non-return valve shaped to fit the adaptor.

2. An assembly according to claim 1 wherein the adaptor has an external screw thread (5) for attachment of a pump or other source of gas under pressure, an axially extending pocket (6) with an internal screw thread (7), an external screw thread (8) and an orifice or nozzle (9).

3. An assembly according to claim 1 wherein the adaptor has an external screw thread (8) to fit a radiator bleed valve and wherein the adaptor has an internal pocket (6) shaped to receive the non-return valve as a frictional or crimped fit.

4. A non-return valve assembly for application to a heating radiator comprising an adaptor including (a) an external screw thread (8) to enable the adaptor to be connected to a radiator (b) an internal pocket (6) to receive a non-return valve an (c) an internal passage leading from the pocket (6) to a nozzle (9) and a non-return valve shaped for connection to the adaptor and adapted to be inserted into the pocket.

5. A method of isolating a heating radiator comprising the steps of closing both shut off valves at the bottom of the radiator, removing the bleed screw and replacing it by a non return valve assembly according to claim 1 or 4, then opening one of the shut off valves and introducing gas under pressure into radiator through the non-return valve assembly to drive the water out of the radiator and finally removing the now empty radiator from the system.

0218409

*Fig.1.*

*Fig.2.*

*Fig.3.*

*Fig.4.*

Fig.5.

Fig.6.